# EUROPEAN PATENT APPLICATION

(11) **EP 3 038 032 A1**
(43) Date of publication of application: **29.06.2016**
(21) Application number: 14760238.7
(22) Date of filing: 25.02.2014
(51) Int. Cl.: G06Q 10/10

(54) **SERVICE MESSAGE TRANSMITTING METHOD AND DEVICE**

(30) Priority: 22.08.2013 CN 201310370479
(71) Applicant: ZTE Corporation, Shenzhen, Guangdong 518057 (CN)
(72) Inventor: LONG, Liping, Shenzhen Guangdong 518057 (CN); LIU, Yong, Shenzhen Guangdong 518057 (CN); LI, Jiang, Shenzhen Guangdong 518057 (CN)
(74) Representative: Deambrogi, Edgardo
(86) International application number: PCT/CN2014/072522
(87) International publication number: WO 2014/135016

(57) **Abstract**

Provided are a method and device for transmitting a service message. The method for transmitting a service message includes that: a copy of processed service message is cached; a format of the processed service message is converted and the format-converted processed service message is then transmitted to a corresponding service gateway; and retransmission processing is performed, upon a failure in transmitting the format-converted processed service message, based on the processed service message cached. The method caches a service message before transmitting the service message, and upon a failure in transmitting the service message, retransmits the cached service message, thus improving the success rate of service message transmission, and reducing service loss.

## Description

### Technical Field

The present disclosure relates to the field of mobile communications, particularly to a method and device for transmitting a service message.

### Background

An Integrated Service Access Gateway (ISAG) is a functional entity for accessing services in a unified manner and monitoring the quality of services in a mobile service network. With the help of the ISAG, an operator is able to open up telecommunication network resources and control usage of the network resources, shield from a Content Provider (CP)/Service Provider (SP) the complexity of underlying network techniques, and provide a unified service development environment, thereby making service development easier. In addition, the ISAG also provides a converged service to a user, enriches service forms, facilitates application of a development enterprise, and expands a user market for an enterprise.

An SP may use the ISAG to deliver, through a short message or a multimedia message, a provided content or service to a Short Message Gateway (SMGW) or a Multimedia Message Gateway (MMGW), which then transmit the provided content or service to a mobile phone of a user. However, in cases that there is a network congestion or the SMGW/MMGW malfunctions, the ISAG may fail to transmit the message to the SMGW/MMGW and may return to the SP a state report indicating the transmission failure. Service loss may be caused to the SP if there are many messages transmitted unsuccessfully. Moreover, if the SP retransmits the messages, the volume of data in the network or the number of messages to be processed by the system will be also increased.

When the SP delivers a large number of messages (a large amount of information would be delivered at the same time especially during a busy period), the ISAG will fail to deliver the information when forwarding the messages to a service gateway including an SMGW, a Multimedia Message Service Center (MMSC) and so on due to reasons including overload on interfaces of these service gateways. Since a traffic control mechanism of the ISAG itself does not enable caching of the messages, which are transmitted unsuccessfully due to overload or interface failure, thus leading to loss of these SP requests.

### Summary

The embodiments of the disclosure provide a method and device for transmitting a service message which can improve a success rate of service message transmission, so as to solve at least one of the problems above.

In order to solve at least one of the technical problems above, an embodiment of the present disclosure provides a method for transmitting a service message, including that:
a copy of processed service message is cached;
a format of the processed service message is converted and then the format-converted processed service message is transmitted to a corresponding service gateway; and
retransmission processing is performed, upon a failure in transmitting the format-converted processed service message, based on the processed service message cached.

In an example embodiment, retransmission processing may be performed based on the processed service message cached in a manner as follows:
whether the processed service message cached satisfies a preset retransmission condition is judged, and when the processed service message cached satisfies the preset retransmission condition, the processed service message cached is extracted, the format of the processed service message is converted, and then the format-converted processed service message is retransmitted to the service gateway, and whether the processed service message is retransmitted successfully is judged, and when the processed service message is retransmitted successfully, the processed service message cached is deleted.

In an example embodiment, performing retransmission processing based on the processed service message cached may further include that:
when the processed service message is retransmitted unsuccessfully, the processed service message cached is retransmitted again.

In an example embodiment, performing retransmission processing based on the processed service message cached may further include that:
when the processed service message cached does not satisfy the preset retransmission condition, the processed service message cached is deleted.

In an example embodiment, whether the processed service message cached satisfies the preset retransmission condition may be judged in a manner as follows:
whether it is necessary to retransmit the processed service message is judged according to a reason for the failure in transmitting the format-converted processed service message, when it is not necessary to retransmit the processed service message, it is determined that the processed service message cached does not satisfy the preset retransmission condition, and when it is necessary to retransmit the processed service message, whether the number of retransmission times is smaller than a preset number of times is further judged, when the number of retransmission times is smaller than the preset number of times, it is determined that the processed service message cached satisfies the preset retransmission condition, and when the number of retransmission times is larger than the preset number of times, it is determined that the processed service message cached does not satisfy the preset retransmission condition.

In an example embodiment, caching a copy of processed service message may include that:
a copy of processed service message is cached in a session.

In an example embodiment, before a copy of processed service message is cached, the method may further include that: a service message is received and processed.

In an example embodiment, before a copy of processed service message is cached, the method may further include that: whether the service message satisfies a caching condition is judged, when the service message satisfies the caching condition, the step that a copy of processed service message is cached is performed, and when the service message does not satisfy the caching condition, the processed service message is not cached, the format of the processed service message is converted directly and then the format-converted processed service message is transmitted to the corresponding service gateway.

In an example embodiment, the caching condition may include at least one of the followings: a degree of importance of the service message is higher than a preset level and a type of the service message is a preset type that requires caching.

Likewise, another embodiment of the present disclosure further provides a device for transmitting a service message to solve the technical problems above, including: a caching component, a service retransmission processing component, and a service transmitting component, wherein
the caching component is configured to cache a copy of processed service message;
the service transmitting component is configured to convert a format of the processed service message and then transmit the format-converted processed service message to a corresponding service gateway; and
the service retransmission processing component is configured to perform retransmission processing, upon a failure in transmitting the format-converted processed service message, based on the processed service message cached.

In an example embodiment, the service retransmission processing component may include: a service judging component.

The service judging component is configured to judge whether the processed service message cached satisfies a preset retransmission condition, and when the processed service message cached satisfies the preset retransmission condition, notify the caching component to extract the processed service message cached and to transmit the processed service message cached to the service transmitting component for retransmission, and judge whether the processed service message is retransmitted successfully, and when the processed service message is retransmitted successfully, notify the caching component to delete the processed service message cached.

In an example embodiment, the service judging component may be further configured to perform, when the processed service message is retransmitted unsuccessfully, retransmission processing again based on the processed service message cached.

In an example embodiment, the service judging component may be further configured to notify, when judging that the processed service message cached does not satisfy the preset retransmission condition, the caching component to delete the processed service message cached.

In an example embodiment, the service judging component may be configured to judge, according to a reason for the failure in transmitting the format-converted processed service message, whether it is necessary to retransmit the processed service message, when it is not necessary to retransmit the processed service message, determine that the processed service message cached does not satisfy the preset retransmission condition, and when it is necessary to retransmit the processed service message, further judge whether the number of retransmission times is smaller than a preset number of times, when the number of retransmission times is smaller than the preset number of times, determine that the processed service message cached satisfies the preset retransmission condition, and when the number of retransmission times is larger than the preset number of times, determine that the processed service message cached does not satisfy the preset retransmission condition.

In an example embodiment, the caching component may be configured to cache a copy of processed service message in a session.

In an example embodiment, the device may further include: a service processing component, configured to receive a service message, and process the service message.

In an example embodiment, the device may further include: a cache judging component, configured to judge whether the service message satisfies a caching condition, when the service message satisfies the caching condition, invoke the caching component and the service transmitting component, and when the service message does not satisfy the caching condition, invoke the service transmitting component.

In an example embodiment, the caching condition may include at least one of the followings: a degree of importance of the service message is higher than a preset level and a type of the service message is a preset type that requires caching.

The embodiments of the present disclosure have the following beneficial effect.

The embodiments of the present disclosure provide a method and device for transmitting a service message capable of improving the success rate of service message transmission. According to the method for transmitting a service message, a copy of processed service message is cached; a format of the processed service message is converted and the format-converted processed service message is then transmitted to a corresponding service gateway; and retransmission processing is performed, upon a failure in transmitting the format-converted processed service message, based on the processed service message cached. The method of the embodiments of the present disclosure caches a service message before transmitting the service message, and upon a failure in transmitting the service message, retransmits the cached service message. The method for transmitting a service message of the embodiments of the present disclosure can improve the success rate of service message transmission and reduce service loss compared with the related art.

### Brief Description of the Drawings

Fig. 1 is a flowchart of a method for transmitting a service message provided by the first embodiment of the present disclosure;
Fig. 2 is a schematic diagram of the first example flow of a method for transmitting a service message provided by the first embodiment of the present disclosure;
Fig. 3 is a schematic diagram of the second example flow of a method for transmitting a service message provided by the first embodiment of the present disclosure;
Fig. 4 is a flowchart of a method for judging whether a preset retransmission condition is satisfied according to the first embodiment of the present disclosure;
Fig. 5 is a structural diagram of a service system provided by the second embodiment of the present disclosure;
Fig. 6 is a flowchart of message transmission of an ISAG according to the second embodiment of the present disclosure;
Fig. 7 is a structural diagram of a device for transmitting a service message provided by the third embodiment of the present disclosure;
Fig. 8 is a schematic diagram of the first example structure of a device for transmitting a service message provided by the third embodiment of the present disclosure;
Fig. 9 is a schematic diagram of the second example structure of a device for transmitting a service message provided by the third embodiment of the present disclosure; and
Fig. 10 is a schematic diagram of the third example structure of a device for transmitting a service message provided by the third embodiment of the present disclosure.

### Detailed Description of the Embodiments

The present disclosure will be further described hereinafter through specific embodiments and with reference to the accompanying drawings.

### Embodiment 1

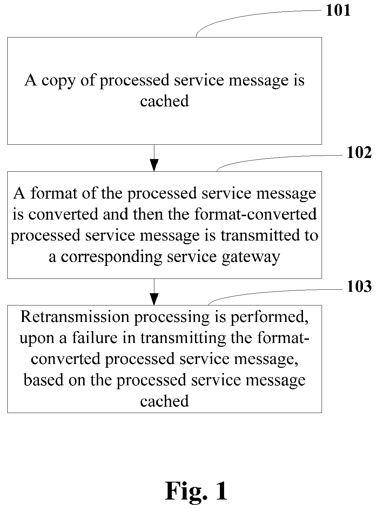

As shown in Fig. 1, the present embodiment provides a method for transmitting a service message, including the following steps:
Step 101: A copy of processed service message is cached.
Step 102: A format of the processed service message is converted and then the format-converted processed service message is transmitted to a corresponding service gateway.
Step 103: Retransmission processing is performed, upon a failure in transmitting the format-converted processed service message, based on the processed service message cached.

The method for transmitting a service message of the present embodiment may cache a copy of service message before transmitting the service message, and may retransmit the cached service message upon a failure in transmitting the service message, thus avoiding loss of the service message caused by the failure in transmitting the service message, and the success rate of service message transmission can be improved. The retransmission processing of the present embodiment may include that the processed service message cached is extracted directly for retransmission, and may alternatively include that retransmission is performed according to a preset condition. It needs to be noted that the service message may be a service message received from another network element, such as an SP, and may also be a service message generated by a current network element, which is not limited by the present disclosure.

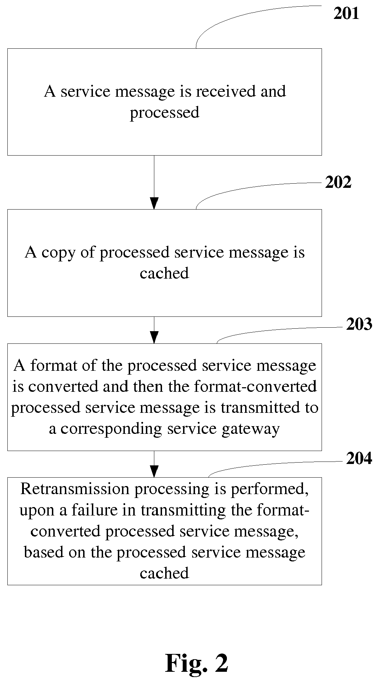

As shown in Fig. 2, the present embodiment further provides an example method for transmitting a service message if the service message is received by a current network element from another network element, including the following steps:
Step 201: A service message is received and processed.
Step 202: A copy of processed service message is cached.
Step 203: A format of the processed service message is converted and then the format-converted processed service message is transmitted to a corresponding service gateway.
Step 204: Retransmission processing is performed, upon a failure in transmitting the format-converted processed service message, based on the processed service message cached.

The method for transmitting a service message of the present embodiment may cache a copy of service message before transmitting the service message, and may retransmit the cached service message upon a failure in transmitting the service message, thus avoiding loss of the service message caused by the failure in transmitting the service message, and the success rate of service message transmission can be improved. The retransmission processing of the present embodiment may include that the processed service message cached is extracted directly for retransmission, and may alternatively include that retransmission is performed according to a preset condition.

The processing of the service message in the present embodiment may include that the received service message is parsed and the parsed message is processed according an internal process, such as charging, statistics and so on.

The format of the processed service message is converted and then the format-converted processed service message is transmitted to the corresponding service gateway in the present embodiment. As an example implementation, the format is mainly converted according to the type of the service message and the service gateway. For example, when a short message is received, after the short message is parsed and processed according an internal process, the format of the processed short message is converted, for example, into a standard Short Message Peer-to-Peer (SMPP)/Short Message Gateway Protocol (SMGP) format, and the format-converted processed short message is finally transmitted to an SMGW.

Before the service message is cached, the method for transmitting a service message of the present embodiment may further include a judging process, so that a service message not satisfying a caching condition is not cached, and only a service message satisfying the caching condition is cached, thereby reducing network traffic and saving network resources. Thus, as an example embodiment, whether the service message satisfies a caching condition may be judged before the copy of processed service message is cached, and when the service message satisfies the caching condition, the step that the copy of processed service message is cached is performed; and when the service message does not satisfy the caching condition, the processed service message is not cached, the format of the processed service message is converted directly and then the format-converted processed service message is transmitted to the corresponding service gateway. The caching condition in the present embodiment may be set according to a practical requirement. For example, whether caching is necessary may be judged according to a degree of importance of the service message, or whether caching is necessary may be judged according to a type of the service message. Thus, the caching condition may include at least one of the followings: a degree of importance of the service message is higher than a preset level and a type of the service message is a preset type that requires caching.

The process of performing retransmission processing based on the processed service message cached in the method for transmitting a service message of the present embodiment may include:
Step 1: Whether the processed service message cached satisfies a preset retransmission condition is judged, if yes, Step 2 is performed, and otherwise, Step 4 is performed.
Step 2: The processed service message cached is extracted, the format of the processed service message is converted, and then the format-converted processed service message is retransmitted to the service gateway.
Step 3: Whether the processed service message is retransmitted successfully is judged, if yes, Step 4 is performed, and otherwise, Step 1 is performed.
Step 4: The processed service message cached is deleted.

In the method for transmitting a service message of the present embodiment, a transmission success state report may be further generated and reported after the cached service message is deleted when the retransmission succeeds, and a transmission failure state report may be further generated and reported after the cached service message is deleted when the preset retransmission condition is not satisfied.

The method of the present embodiment can retransmit the cached service message after the transmission of the service message fails, delete the cached service message if the retransmission succeeds, and perform processing according to a practical requirement if the retransmission fails. For example, the cached service message may be retransmitted again, or the cached service message is not transmitted any more and processed by another preset processing method. Of course, performing retransmission processing based on the cached service message in the present embodiment may include that the cached service message is retransmitted to the service gateway after a certain interval expires, and may alternatively include that the service message is transmitted immediately after being cached. The service message transmitted unsuccessfully may be retransmitted to greatly improve the success rate of message transmission and reduce network traffic.

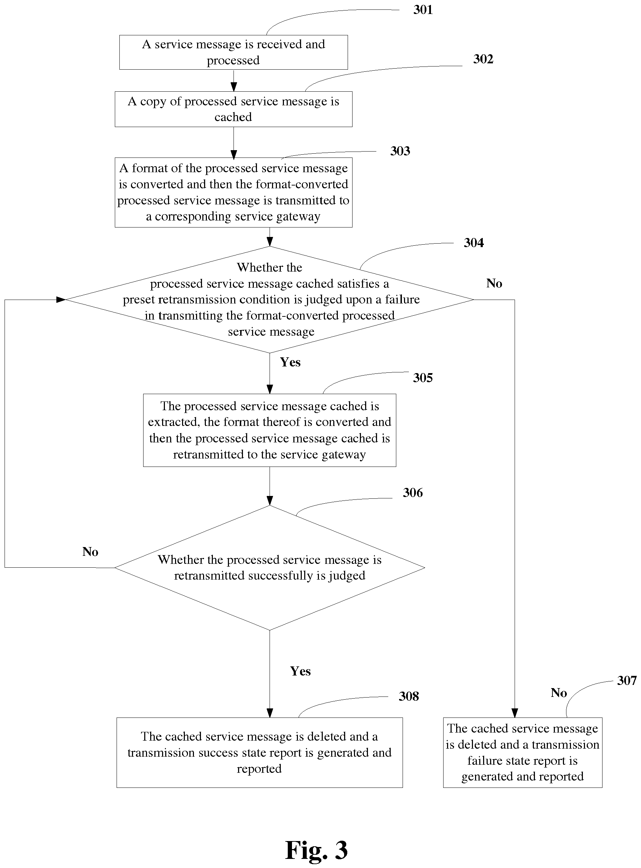

A specific process of an example embodiment of service message transmission of the present embodiment will be introduced in details below, specifically including the following steps as shown in Fig. 3.

Step 301: A service message is received, and processed.

Step 302: A copy of processed service message is cached.

Step 303: A format of the processed service message is converted and then the format-converted processed service message is transmitted to a corresponding service gateway.

Step 304: Whether the processed service message cached satisfies a preset retransmission condition is judged upon a failure in transmitting the format-converted processed service message, if yes, Step 305 is performed, and otherwise, Step 307 is performed.

Step 305: The processed service message cached is extracted, the format thereof is converted and then the format-converted processed service message is retransmitted to the service gateway.

Step 306: Whether the processed service message is retransmitted successfully is judged, if no, Step 304 is performed, and otherwise, Step 308 is performed.

Step 307: The cached service message is deleted, a transmission failure state report is generated and reported, and the flow ends.

Step 308: The cached service message is deleted, a transmission success state report is generated and reported, and the flow ends.

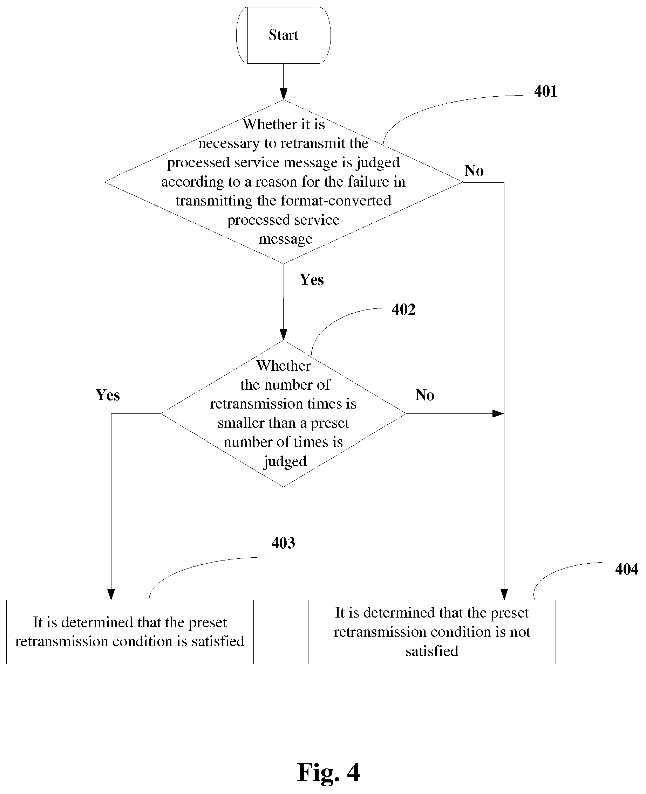

An example embodiment of judging whether the processed service message cached satisfies the preset retransmission condition will be introduced below, including the following steps as shown in Fig. 4.

Step 401: Whether it is necessary to retransmit the processed service message is judged according to a reason for the failure in transmitting the format-converted processed service message, if yes, Step 402 is performed, and otherwise, Step 404 is performed.

Step 402: Whether the number of retransmission times is smaller than a preset number of times is judged, if yes, Step 403 is performed, and otherwise, Step 404 is performed.

Step 403: It is determined that the preset retransmission condition is satisfied.

Step 404: It is determined that the preset retransmission condition is not satisfied.

The preset retransmission condition in the present embodiment may be set according to a requirement of a user. For example, the preset retransmission condition may be the reason for the failure in transmitting the format-converted processed service message, and the number of transmission times. For example, in a service system, a message may be transmitted to an SMGW/MMGW unsuccessfully because an SP is not registered at the SMGW/MMGW. In this case, as an example embodiment, it is unnecessary to retransmit the message transmitted unsuccessfully, otherwise, network traffic will be increased on the contrary. However, the service message may be retransmitted again in cases that the message is transmitted unsuccessfully due to network congestion or abnormality of the SMGW/MMGW.

In the method for transmitting a service message of the present embodiment, the step that a copy of processed service message is cached may include that: a copy of processed service message is cached in a session. A copy of processed service message may alternatively be cached in another storage medium in the method for transmitting a service message of the present embodiment.

The method for transmitting a service message of the present embodiment is applicable to caching and transmitting a message of a short message or a multimedia message, and may also be applicable to caching and transmitting a message of other services.

### Embodiment 2

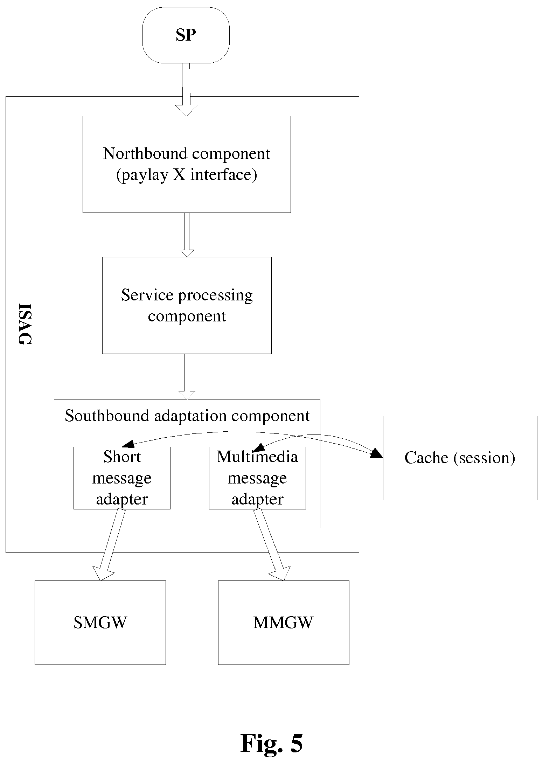

The method for transmitting a service message introduced in the first embodiment may be applied to an ISAG. The present embodiment introduces a specific process in which the method for transmitting a service message is applied to the ISAG. As shown in Fig. 5, a service system is introduced, consisting of an SP, an ISAG, a SMGW, and a MMGW, wherein the ISAG of the present embodiment includes: a northbound component, a service processing component and a southbound adaptation component.

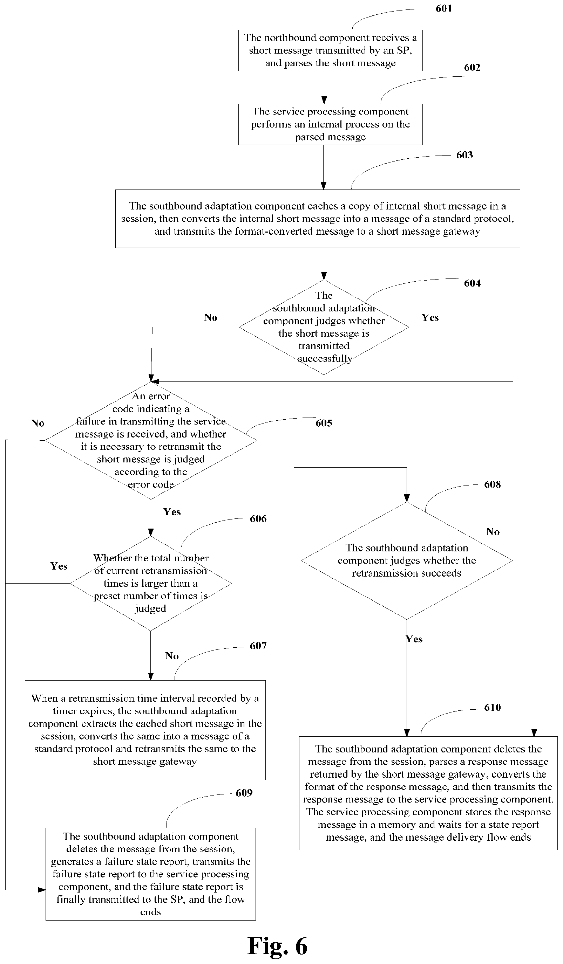

As shown in Fig. 6, a specific process that the ISAG transmits a service message (e.g. a short message) in the present embodiment may include the following steps.

Step 601: The northbound component receives a short message transmitted by the SP, and parses the short message.

Northbound component may provide a standard parlay X interface, the SP may transmit a short message or a multimedia message content to the northbound component in a standard parlay X webservice message format and the northbound component parses the message.

Step 602: The service processing component performs an internal process on the parsed message.

Service processing component: the northbound component transmits the processed short message to the service processing component, and the service processing component performs processing of an internal process, including charging, statistics and so on.

Step 603: The southbound adaptation component caches a copy of internal short message in a session, then converts the internal short message into a message of a standard protocol, and transmits the format-converted message to a short message gateway.

South bound adaptation component provide an adaptation method of different services, including a short message, a multimedia message and so on so as to adapt to service gateways, including an SMGW, a MMGW and so on. The south bound adaptation component converts an internal message of the ISAG into a standard SMPP/SMGP protocol, an MM7 protocol or other protocols, and transmits the internal message to other service gateways including an SMGW, a MMGW and so on.

Step 604: The southbound adaptation component judges whether the short message is transmitted successfully, if so, performs Step 610, and otherwise, performs Step 605.

Step 605: An error code indicating a failure in transmitting the service message is received, and whether it is necessary to retransmit the short message is judged according to the error code. If yes, Step 606 is performed, and otherwise, Step 609 is performed.

Step 606: Whether the total number of retransmission times is larger than a preset number of times is judged, if yes, Step 609 is performed, and otherwise, Step 607 is performed.

Step 607: When a retransmission time interval recorded by a timer expires, the southbound adaptation component extracts the cached short message in the session, converts the short message into a message of a standard protocol and retransmits the converted short message to the short message gateway.

Step 608: The southbound adaptation component judges whether the retransmission succeeds, if yes, Step 605 is performed, and otherwise, Step 610 is performed.

Step 609: The southbound adaptation component deletes the message from the session, generates a failure state report, transmits the failure state report to the service processing component, and the failure state report is finally transmitted to the SP, and the flow ends.

Step 610: The southbound adaptation component deletes the message from the session, parses a response message returned by the short message gateway, converts the format of the response message, and then transmits the response message to the service processing component. The service processing component stores the response message in a memory and waits for a state report message, and the message delivery flow ends.

By applying the method for transmitting a service message provided by the embodiment of the present disclosure, the ISAG can cache a to-be-transmitted message in advance before transmitting the message. The cached message may be retransmitted when the message is transmitted unsuccessfully, thereby greatly improving the success rate of message transmission, and reducing network traffic.

The ISAG of the present embodiment is applicable to caching and transmitting a message of a short message service and a multimedia message service, and may also be applicable to caching and transmitting a message of other services.

### Embodiment 3

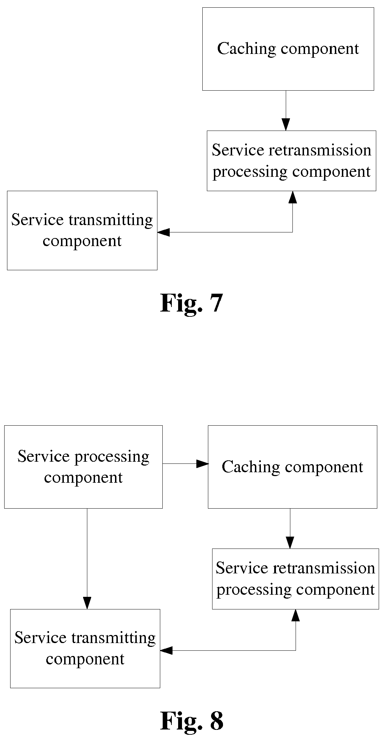

As shown in Fig. 7, the present embodiment provides a device for transmitting a service message, including: a caching component, a service retransmission processing component, and a service transmitting component, wherein
the caching component is configured to cache a copy of processed service message;
the service transmitting component is configured to convert a format of the processed service message and then transmit the format-converted processed service message to a corresponding service gateway; and
the service retransmission processing component is configured to perform retransmission processing, upon a failure in transmitting the format-converted processed service message, based on the processed service message cached.

The device for transmitting a service message of the present embodiment may cache a copy of service message before transmitting the service message, and may retransmit the cached service message upon a failure in transmitting the service message, thus avoiding loss of the service message caused by the failure in transmitting the service message, and the success rate of service message transmission can be improved. The retransmission processing of the present embodiment may include that the processed service message cached is extracted directly for retransmission, and may also include that retransmission is performed according to a preset condition. It needs to be noted that the service message may be a service message received from another network element, such as an SP, and may also be a service message generated by a current network element, which is not limited by the present disclosure.

As shown in Fig. 8, the present embodiment further provides a device for transmitting a service message in the case that the device receives the service message from another network element. The device for transmitting a service message includes: a service processing component, a caching component, a service retransmission processing component and a service transmitting component, wherein
the service processing component is configured to receive a service message and process the service message;
the caching component is configured to cache a copy of processed service message;
the service retransmission processing component is configured to convert a format of the processed service message and then transmit the format-converted processed service message to a corresponding service gateway; and
the service retransmission processing component is configured to perform retransmission processing, upon a failure in transmitting the format-converted processed service message, based on the processed service message cached.

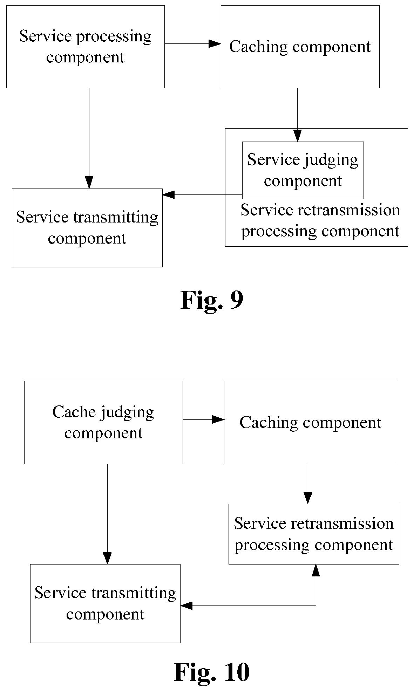

As shown in Fig. 9, the service retransmission processing component in the device for transmitting a service message of the present embodiment includes: a service judging component.

The service judging component is configured to judge whether the processed service message cached satisfies a preset retransmission condition, and when the processed service message cached satisfies the preset retransmission condition, notify the caching component to extract the processed service message cached and to transmit the processed service message cached to the service transmitting component for retransmission, and judge whether the processed service message is retransmitted successfully, and when the processed service message is retransmitted successfully, notify the caching component to delete the processed service message cached.

In another application scenario, the service judging component is further configured to perform retransmission processing again based on the processed service message cached when the processed service message is retransmitted unsuccessfully.

In another application scenario, the service judging component is further configured to notify, when judging that the processed service message cached does not satisfy the preset retransmission condition, the caching component to delete the processed service message cached.

In an example embodiment, the service judging component in the present embodiment is configured to judge, according to a reason for the failure in transmitting the format-converted processed service message, whether it is necessary to retransmit the processed service message, when it is not necessary to retransmit the processed service message, determine that the processed service message cached does not satisfy the preset retransmission condition, and when it is necessary to retransmit the processed service message, further judge whether the number of retransmission times is smaller than a preset number of times, when the number of retransmission times is smaller than the preset number of times, determine that the processed service message cached satisfies the preset retransmission condition, and when the number of retransmission times is larger than the preset number of times, determine that the processed service message cached does not satisfy the preset retransmission condition.

In an example embodiment, as shown in Fig. 10, the device for transmitting a service message of the present embodiment may further include: a cache judging component, configured to judge whether the service message satisfies a caching condition, when the service message satisfies the caching condition, invoke the caching component and the service transmitting component, and when the service message does not satisfy the caching condition, invoke the service transmitting component. In this example embodiment, the caching condition may be set according to a practical condition. For example, the caching condition may include at least one of the followings: a degree of importance of the service message is higher than a preset level and a type of the service message is a preset type that requires caching.

In an example embodiment, the caching component in the present embodiment is configured to cache a copy of processed service message in a session. The caching component in the present embodiment may alternatively or further cache a copy of processed service message in another storage medium, or the caching component in the present embodiment itself may be a storage medium.

The device for transmitting a service message of the present embodiment may be an ISAG. A specific structure of the ISAG is as shown in Fig. 5, and a process that the ISAG transmits a message is as shown in Fig. 6. All functions of the cache processing component, the service judging component, and the service transmitting component may be implemented by a southbound adaptation component in the ISAG.

The device for transmitting a service message of the present embodiment caches a transmitted message in advance, retransmits the cached message upon a failure in transmitting the message and deletes the cached message upon a success, thereby greatly improving the success rate of message transmission, and reducing network traffic.

The device for transmitting a service message of the present embodiment is applicable to caching and transmitting a message of a short message service and a multimedia message service, and may also be applicable to caching and transmitting a message of other services.

The content above further describes the present disclosure in details in conjunction with the specific embodiments, and it should not be considered that specific implementation of the present disclosure is only limited to these descriptions. For those of ordinary skill in the art, several simple deductions or replacements may also be made without departing from the conception of the present disclosure, and should be regarded as the protection scope of the present disclosure.

## Claims

1. A method for transmitting a service message, comprising:
caching a copy of processed service message;
converting a format of the processed service message and then transmitting the format-converted processed service message to a corresponding service gateway; and
performing retransmission processing, upon a failure in transmitting the format-converted processed service message, based on the processed service message cached.

2. The method for transmitting a service message as claimed in claim 1, wherein performing retransmission processing based on the processed service message cached comprises:
judging whether the processed service message cached satisfies a preset retransmission condition, and when the processed service message cached satisfies the preset retransmission condition, extracting the processed service message cached, converting the format of the processed service message, and then retransmitting the format-converted processed service message to the corresponding service gateway, and judging whether the processed service message is retransmitted successfully, and when the processed service message is retransmitted successfully, deleting the processed service message cached.

3. The method for transmitting a service message as claimed in claim 2, wherein performing retransmission processing based on the processed service message cached further comprises:
when the processed service message is retransmitted unsuccessfully, performing retransmission processing again based on the processed service message cached.

4. The method for transmitting a service message as claimed in claim 2, wherein performing retransmission processing based on the processed service message cached further comprises:
when the processed service message cached does not satisfy the preset retransmission condition, deleting the processed service message cached.

5. The method for transmitting a service message as claimed in any one of claims 2 to 4, wherein judging whether the processed service message cached satisfies the preset retransmission condition comprises:
judging, according to a reason for the failure in transmitting the format-converted processed service message, whether it is necessary to retransmit the processed service message, when it is not necessary to retransmit the processed service message, determining that the processed service message cached does not satisfy the preset retransmission condition, and when it is necessary to retransmit the processed service message, further judging whether the number of retransmission times is smaller than a preset number of times, when the number of retransmission times is smaller than the preset number of times, determining that the processed service message cached satisfies the preset retransmission condition, and when the number of retransmission times is larger than the preset number of times, determining that the processed service message cached does not satisfy the preset retransmission condition.

6. The method for transmitting a service message as claimed in claim 1, wherein caching a copy of processed service message comprises:
caching a copy of processed service message in a session.

7. The method for transmitting a service message as claimed in any one of claims 1 to 6, wherein before caching a copy of processed service message, the method further comprises:
receiving a service message, and processing the service message.

8. The method for transmitting a service message as claimed in any one of claims 1 to 6, wherein before caching a copy of processed service message, the method further comprises:
judging whether the service message satisfies a caching condition, when the service message satisfies the caching condition, performing the step of caching a copy of processed service message, and when the service message does not satisfy the caching condition, not caching the processed service message, converting the format of the processed service message and then transmitting the format-converted processed service message to the corresponding service gateway.

9. The method for transmitting a service message as claimed in claim 8, wherein the caching condition comprises at least one of the followings: a degree of importance of the service message is higher than a preset level, and a type of the service message is a preset type that requires caching.

10. A device for transmitting a service message, comprising: a caching component, a service retransmission processing component, and a service transmitting component, wherein
the caching component is configured to cache a copy of processed service message;
the service transmitting component is configured to convert a format of the processed service message and then transmit the format-converted processed service message to a corresponding service gateway; and
the service retransmission processing component is configured to perform retransmission processing, upon a failure in transmitting the format-converted processed service message, based on the processed service message cached.

11. The device for transmitting a service message as claimed in claim 10, wherein the service retransmission processing component comprises: a service judging component, wherein
the service judging component is configured to judge whether the processed service message cached satisfies a preset retransmission condition, and when the processed service message cached satisfies the preset retransmission condition, notify the caching component to extract the processed service message cached and to transmit the processed service message cached to the service transmitting component for retransmission, and judge whether the processed service message is retransmitted successfully, and when the processed service message is retransmitted successfully, notify the caching component to delete the processed service message cached.

12. The device for transmitting a service message as claimed in claim 11, wherein the service judging component is further configured to perform, when the processed service message is retransmitted unsuccessfully, retransmission processing again based on the processed service message cached.

13. The device for transmitting a service message as claimed in claim 11, wherein the service judging component is further configured to notify, when judging that the processed service message cached does not satisfy the preset retransmission condition, the caching component to delete the processed service message cached.

14. The device for transmitting a service message as claimed in any one of claims 11 to 13, wherein the service judging component is configured to judge, according to a reason for the failure in transmitting the format-converted processed service message, whether it is necessary to retransmit the processed service message, when it is not necessary to retransmit the processed service message, determine that the processed service message cached does not satisfy the preset retransmission condition, and when it is necessary to retransmit the processed service message, further judge whether the number of retransmission times is smaller than a preset number of times, when the number of retransmission times is smaller than the preset number of times, determine that the processed service message cached satisfies the preset retransmission condition, and when the number of retransmission times is larger than the preset number of times, determine that the processed service message cached does not satisfy the preset retransmission condition.

15. The device for transmitting a service message as claimed in claim 10, wherein the caching component is configured to cache a copy of processed service message in a session.

16. The device for transmitting a service message as claimed in any one of claims 10 to 15, wherein the device further comprises: a service processing component, configured to receive a service message, and process the service message.

17. The device for transmitting a service message as claimed in any one of claims 10 to 15, further comprising:
a cache judging component, configured to judge whether the service message satisfies a caching condition, when the service message satisfies the caching condition, invoke the caching component and the service transmitting component, and when the service message does not satisfy the caching condition, invoke the service transmitting component.

18. The service message transmitting component as claimed in claim 17, wherein the caching condition comprises at least one of the followings: a degree of importance of the service message is higher than a preset level and a type of the service message is a preset type that requires caching.
